# EUROPEAN PATENT APPLICATION

(11) **EP 0 749 866 A1**
(43) Date of publication of application: **27.12.1996**
(21) Application number: 96500081.3
(22) Date of filing: 21.06.1996
(51) Int. Cl.: B60N 2/24, B60N 2/44

(54) **Application of a section in vehicle seats**

(30) Priority: 23.06.1995 ES 9501266
(71) Applicant: INDUSTRIAS ESTEBAN, S.A., E-31012 Pamplona (Navarra) (ES)
(72) Inventor: Irmler, Helmut, Industrias Esteban, S.A., 31012 Pamplona, Navarra (ES)
(74) Representative: Carpintero Lopez, Francisco

(57) **Abstract**

The new application or utility of the section in vehicle seats is due to the actual shape of the section, because such section (1) has a cylindrical groove (3) with an open longitudinal sector, the mechanism (8) for the lateral travel of the seat (2) and the mechanism (9) for the seat (2) cushion to be inclined being mountable in such groove (3), in an arrangement of two sections duly fixed under the seat body, the said two mechanisms (8) and (9) being mounted on tubes (10) housed in the cylindrical groove (3) of the section (1), with friction bushings (11) in between. Slots (4) and (5) are conformed in the section (1), the first slot being dovetail-shaped, and lying on the top for a number of seat components to be fixed, and second slot lying on the bottom and being shaped as an elongate triangle, for elements such as seat legs, footrest and armrest mechanisms, supports for fire-extinguishers and the like to be mounted.

## Description

### OBJECT OF THE INVENTION

The invention relates to the application or new use of a section in vehicle seats, which section is shaped so as to allow the quick mounting and dismounting of seats, rendering a number of mechanisms independent, insofar as possible, in order that different seat versions may be mounted in accordance with the number of mechanisms, the reclination of the actual seat, its lateral travel, etc.

In particular, the manner in which the section is applied or used plays an extremely important role as a nexus for joining the seat mechanisms and structure to the seat support or leg.

### BACKGROUND OF THE INVENTION

Many seat manufacturers market sections for mounting the seat mechanisms and structure onto the relevant leg. Reference can purposely be made to European patent 0 283 571 to Ignaz Vogel, which relates to a passenger seat to be mounted in vehicles, claiming a number of section bars or members constituting transverse adapters to fix the relevant legs supporting a vehicle seat, which section bars or members are characterised by being tubular and having ribs, sometimes constituting wings and at others rails to be fixed to the legs or other parts of the vehicle seat.

All the section bars or members claimed and shown in this European patent conform polygonal, and specifically rectangular and straight, guides or wings which hugely limit the use of the actual members, for they do not allow rotatory elements to be mounted, and are not valid for different seat versions, the section bars or members being however such that they are each provided to carry out a particular assembly, and thus if the fixing element of mechanism is varied, a different section bar or member must be used.

### DESCRIPTION OF THE INVENTION

The shape of the section forming part of the object of the invention is known, although it affords certain characteristics that enable a new use or application of the actual section, for the same has a cylindrical groove with a broad sector open longitudinally, two slots being also longitudinally conformed close to the edges defining such opening, one being dovetail-shaped and lying on the top, having regard to the particular arrangement of the section, and the other lying on the bottom and being shaped substantially as an elongate triangle, the section being complemented with outer faces forming a tubular body, with the surface of the cylindrical groove, having an intermediate longitudinal stiffening rib.

Such a particular shape of the section allows a number of vehicle seat mechanisms and components to be mounted because, for instance, the parts corresponding to the structure of the backrest section of the seat, both when the backrest is fixed and reclinable, can be fixed in the top dovetail slot, and abutments for the lateral travel of the seat, and brackets and central armrests of seats, whether they be double or coupled seats, can also be mounted.

For its part, a number of components and mechanisms can be mounted in the bottom slot of the section, such as the actual legs of the seats, the support for holding the seat to the side or inner vehicle wall, the footrest mechanism, the armrest mechanism, direct fittings to shelves, supports for fire-extinguishers, safety-belts, supports for electronic equipment, etc.

As for the cylindrical groove constituting the central essential portion of the section, such allows the seat cushion inclination mechanism and the mechanism for the side travel of the actual seat to be fixed, providing for lateral travel and vertical folding.

Friction or slide bushings are arranged between the inner tube of the lateral travel mechanism of the seat and the cylindrical groove of the actual section, to facilitate travel between the said section and the said inner tube, moreover preventing direct contact between two metallic parts, such as the two aforesaid, which lie upon each other and travel with respect to one another.

The hollow part conformed in the section allows air tubes to be fitted, electric cables to be guided, etc.

In conclusion, said section is what could be called a "wild card" and allows seats to be simply and quickly mounted and dismounted, the mechanisms aforesaid to be rendered independent, different seat versions to be mounted, etc.

### DESCRIPTION OF THE DRAWINGS

In order to provide a fuller description and contribute to the complete understanding of the features of this invention, a set of drawings is attached to the specification which, while purely illustrative and not fully comprehensive, shows the following:

Figure 1.- Is a representation of a cross-section, albeit in landscape, of the section designed for the new application or use in vehicle seats.

Figure 2.- Is a schematic representation of a side elevation of a seat, including the leg and backrest, and the location of two sections for the relevant mechanisms and elements forming part of the seat to be mounted.

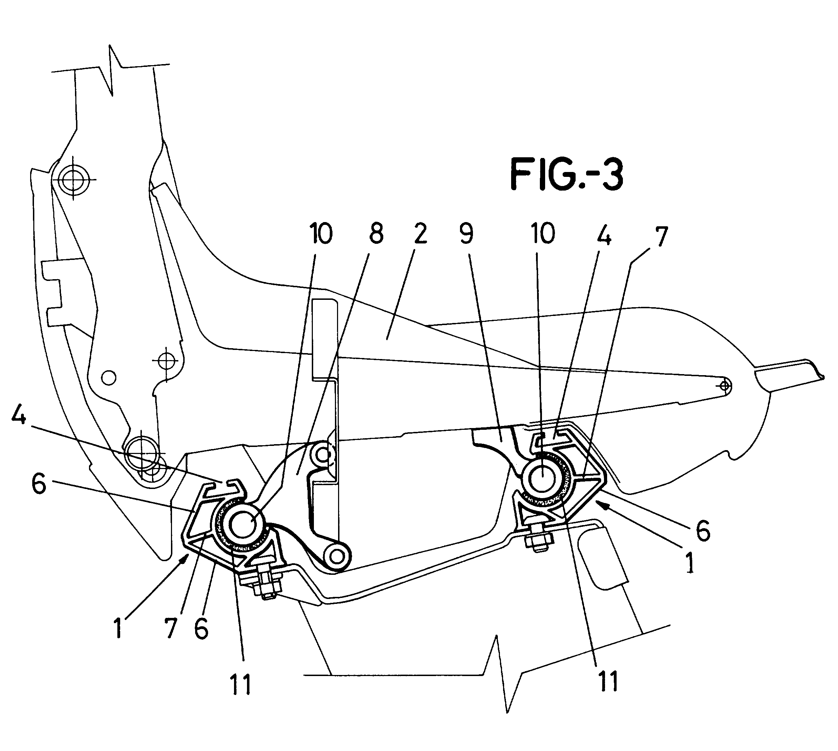

Figure 3.- Is a detailed representation of one of the applications of the section, actually constituting the means for mounting the mechanism for the lateral travel of a seat.

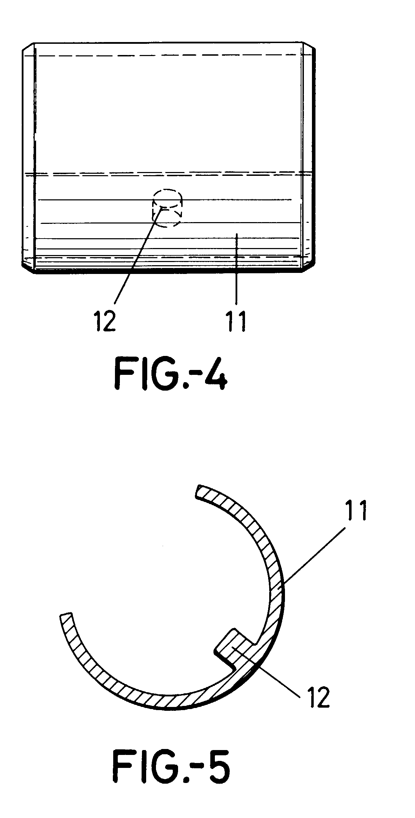

Figure 4.- Is an elevation view of the bushing used in mounting between the slide tube for the lateral travel of the seat and the actual section, as shown in the preceding figure.

Figure 5.- Is finally a cross-section of the bushing shown in the preceding figure and used in mounting the elements shown in figure 3.

### PREFERRED EMBODIMENT OF THE INVENTION

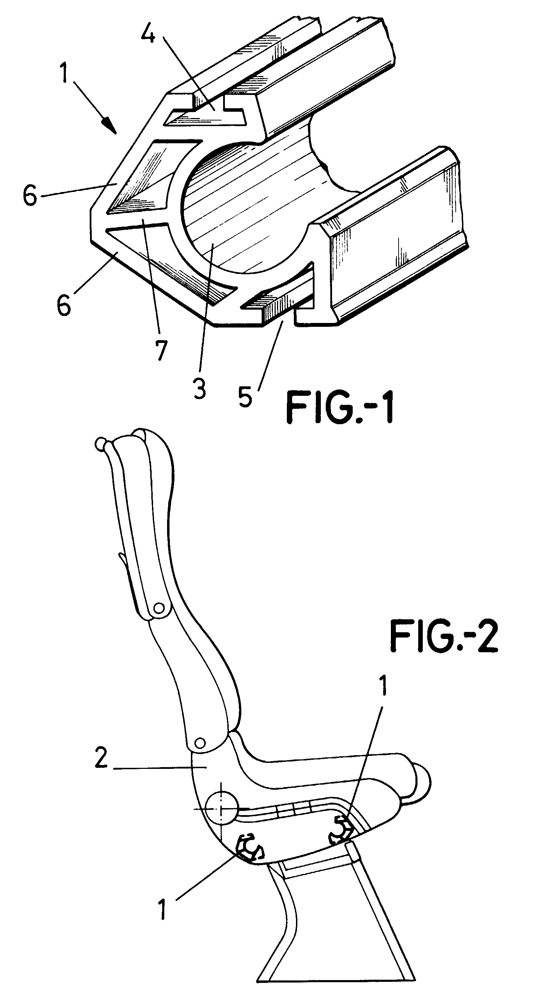

With reference to the figures, the section (1) designed to be applied and used in a vehicle seat (2), as shown in figure 2, where two sections (1) are arranged in a suitable position to mount and fix a number of elements and mechanisms as explained hereinafter, is provided with a cylindrical longitudinal groove (3) having a broad open sector, two slots (4) and (5) being conformed close to the edges defining the mouth of the groove (3), the first slot lying on the top of the section (1) when it is suitably arranged on the seat (2), whereas the second slot lies on the bottom, as figures 1 and 2 clearly show.

The top slot (4) is dovetail-shaped whereas the bottom slot (5) is substantially triangular, both having a narrow mouth.

The section is complemented with outer walls (6) which, with the wall of the cylindrical groove (3), define a space or hollow with an intermediate divider (7) stiffening the section proper, thereby for the space or hollow defined in accordance with the above explanation to allow the passage of electric wires, tubes, etc.

As explained hereinbefore, the top dovetail-shaped slot (4) allows the relevant structure to be fixed to the section and backrest of the seat (2), whether the backrest is fixed or reclinable, and to fix the abutments for the lateral travel of the actual seat, mount brackets and even the intermediate arms of coupled or double seats.

The bottom slot (5) allows the legs of the seats and the support holding the actual seat to the side or inner wall of the vehicle to be fixed, and even the footrest and armrest mechanisms, supports for fire-extinguisher, safety-belts, etc. to be mounted.

The mechanism (8) for the side travel of the seat (2) and the mechanism (9) for the cushion of the seat proper to be inclined can be mounted in the cylindrical groove (3) of the section (1).

In both cases, a bushing (11), with a broad open sector, is located between the cylindrical groove (3) of the section (1) and the relevant tube (10) on which such mechanisms (8) and (9) are mounted, which bushing (11) is fitted with an inner appendage (12) and constitutes a friction slide element which facilitates travel of the relevant tube (10) and section (1), concurrently avoiding direct contact between said two parts (section (1) and tube (10)) which are metallic and are supported on each other, from sliding with respect to one another.

## Claims

1. An application of a section in vehicle seats, which affords a new utility for a particular section in vehicle seats, to allow certain parts and mechanisms of the seat as a whole to be fixed and mounted, enabling the said mechanisms to be rendered independent in order that different seat versions may be mounted and fixed, characterised in that the section (1) as such has a main cylindrical groove (3) having a broad longitudinally open sector, two slots being conformed close to the edges of such open sector, namely a top dovetail-shaped slot (4) and a bottom slot (5) shaped as an elongate triangle, the section having outer walls (6) and an intermediate divider (7) which define hollows for the passage of electric wires, tubes and the like; two sections (1) having been provided to be fixed under the seat, with their cylindrical grooves (3) facing each other, the mechanism (8) for the side travel of the seat and the mechanism (9) for the seat cushion to be inclined being respectively mounted therein, being particular in that such mechanisms (8) and (9) are mounted on the relevant cylindrical groove (3) through tubes (10), with friction bushings (11) lying between the same and the groove (3) proper, facilitating travel between such inner tube (10) and the respective section (1).

2. An application of a section in vehicle seats, as in claim 1, characterised in that the seat backrest section structure, both when the backrest is fixed and reclinable, the abutments for the lateral travel of such seat, brackets and the central armrest of coupled or double seats may be fixed on the top dovetail-shaped groove slot (4) of the section (1).

3. An application of a section in vehicle seats, as in claim 1, characterised in that the legs and support holding the seat and the footrest and armrest mechanisms, and even the direct fittings to shelves, supports for fire-extinguishers, electronic equipment and the like, and safety-belts can be fixed in the bottom elongate triangle-shaped slot (5) of the section (1).
